Europäisches Patentamt

European Patent Office

Office européen des brevets

(11) Veröffentlichungsnummer: **0 300 469 B1**

(19)

(12) **EUROPÄISCHE PATENTSCHRIFT**

(45) Veröffentlichungstag der Patentschrift: 27.11.91

(51) Int. Cl.⁵: **B60R 22/46**

(21) Anmeldenummer: **88111718.8**

(22) Anmeldetag: **20.07.88**

(54) **Gurtstrammer für Fahrzeugsicherheitsgurte.**

(30) Priorität: **21.07.87 DE 3724133**

(43) Veröffentlichungstag der Anmeldung:
**25.01.89 Patentblatt 89/04**

(45) Bekanntmachung des Hinweises auf die
Patenterteilung:
**27.11.91 Patentblatt 91/48**

(84) Benannte Vertragsstaaten:
**DE ES FR GB IT SE**

(56) Entgegenhaltungen:
**EP-A- 0 195 268**
**US-A- 4 447 017**

(73) Patentinhaber: **Autoliv-Kolb GmbH & Co.**
**Theodor-Heuss-Strasse 2**
**W-8060 Dachau(DE)**

(72) Erfinder: **Knabel, Walter, Dr.**
**Nock-Strasse 13**
**W-8110 Murnau/Staffelsee(DE)**
Erfinder: **Mayer, Josef**
**Freiherrn-Strasse 2**
**W-8061 Weichs(DE)**
Erfinder: **Wentker, Stephan**
**Troppauer-Strasse 8A**
**W-8060 Dachau(DE)**

(74) Vertreter: **Gossel, Hans K., Dipl.-Ing. Lorenz-**
**Seidler-Gossel et al**
**Widenmayerstrasse 23**
**W-8000 München 22(DE)**

## Beschreibung

Die Erfindung betrifft einen Gurtstrammer für Fahrzeugsicherheitsgurte, bestehend aus einer das Gurtschloß im Sinne einer Gurtstrammung bewegenden und am Ende der strammenden Bewegung blockierenden Einrichtung, die durch ein sogenanntes fahrzeugsensitives System bei Überschreiten vorbestimmter kritischer Beschleunigungs oder Verzögerungswerte aktiviert wird.

Die durch Fahrzeugsicherheitsgurte erreichbare Sicherheit kann durch Gurtstrammer noch weiter erhöht werden. Gurtstrammer haben die Aufgabe, bei kritischen Beschleunigungswerten, die den unmittelbar nach einem Unfall oder einem sogenannten Crash auftretenden Beschleunigungs- oder Verzögerungswerten entsprechen, den Sicherheitsgurt zu spannen, so daß die zu sichernde Person in ihrem Sitz bereits durch den Gurt fest gegen den Sitz und die Rückenlehne gehalten wird, bevor sie aufgrund der Trägheitskräfte ihres Körpers und einer Relativbewegung gegenüber dem Fahrzeug den Gurt ausziehen kann. Durch die Strammung des Gurtes im Falle eines Unfalls oder Crash wird die zu sichernde Person gleichsam an den Sitz angekoppelt, so daß sie sehr frühzeitig an der Verzögerung des Fahrzeugs teilnehmen kann. Die Strammung des Gurtes vermindert weiterhin den Weg, den die zu sichernde Person im Falle eines Unfalls nach vorn fallen kann, so daß verhindert werden kann, daß die Person mit größerer Wucht mit ihrem Kopf oder anderen Körperteilen an das Lenkrad oder andere Fahrzeugteile anstößt. Die Gurtstrammung über das Gurtschloß ist allerdings nur möglich, wenn der Gurt bereits vor der Strammung in dem Gurtaufroller blockiert ist. Diese Blockierung wird dadurch gewährleistet, daß auch der Gurtaufroller mit einem sogenannten fahrzeugsensitivem System versehen ist, das die Gurtrolle bei geringeren Beschleunigungswerten blockiert, so daß die Gurtrolle sich bereits in ihrem blockierten Zustand befindet, bevor das auf höhere Beschleunigungswerte reagierende fahrzeugsensitive System des Strammers anspricht und dadurch der Gurt straff gezogen wird.

Ein aus US-A-44 47 017 bekannter Gurtstrammer besteht aus einer Spindel mit einem Gewinde mit großer Steigung, die in eine gehäusefeste Mutter durch eine vorgespannte Feder hineingedrückt wird, wenn im Gefahrenfalle das fahrzeugsensitive System die Feder freigibt. Durch den von der Spindel abgeleiteten Drehantrieb wird entweder die Gurtwelle zur Spannung des Gurtes zurückgedreht oder die Spindel spannt über ein Zugglied und eine Drehkupplung einen Befestigungsbeschlag oder einen Umlenkbeschlag des Gurtes.

Bei einem aus EP-A-095 268 bekannten Gurtstrammer ist das Gurtschloß an einem schwenkbar an einer fahrzeugfesten Platte angelenkten Spannhebel befestigt, der von einer Feder in der strammenden Spannrichtung beaufschlagt und von einem Sperrglied in seiner inaktiven Stellung gehalten ist. Das Sperrglied gibt den Spannhebel bei kritischen Beschleunigungswerten frei. Der Spannhebel ist in seiner strammenden Endstellung gegenüber dem fahrzeugfesten Teil durch eine Ratsche blockiert, deren Klinkenhebel schwenkbar auf dem Spannhebel gelagert ist. Die den Spannhebel beaufschlagende Feder besteht aus einem in einem Rohr angeordneten Torsionsfederstab, wobei das innere Ende des gehäuseartigen Rohres an der Platte befestigt ist und das freie Ende des Torsionsfederstabes auf den Spannhebel wirkt. Bei Auftreten von einem Crash entsprechenden Beschleunigungswerten wird der Torsionsfederstab aufgrund der auf diesen wirkenden Beschleunigungswerte so verlagert, daß ein mit diesem verbundener Hebel, der mit dem Spannhebel durch eine Bolzen-Langloch-Verbindung gekoppelt ist, von einem ein Widerlager bildenden Kugellager freikommt und den Spannhebel in seine den Gurt spannende Stellung zieht.

Aufgabe der Erfindung ist es, einen Gurtstrammer der eingangs angegebenen Art mit einfachem und funktionssicherem Aufbau zu schaffen.

Erfindungsgemäß wird diese Aufgabe dadurch gelöst, daß das das Gurtschloß mit einem fahrzeugfesten Teil verbindende Tragstück in einem mit dem Fahrzeug fest verbundenen oder mit diesem verriegelbaren Gehäuse o.dgl. längs verschieblich geführt und das Gehäuse o.dgl. mit einer Einrichtung versehen ist, die eine Einzugsbewegung des Tragstücks gestattet und dessen Bewegung in Auszugsrichtung blockiert, daß das Gurtschloß oder das Tragstück mit einem Ende eines vorzugsweise flexiblen Zugorgans verbunden ist, dessen anderes Ende mit einem aus einer vorgespannten Feder bestehenden Kraftreservoir verbunden ist, das oder die bei ihrer Entspannung dem Gurtschloß über das Zugorgan eine Einzugsbewegung erteilen, und daß das fahrzeugsensitive System eine die Feder in ihrer vorgespannten Stellung haltende Verriegelungseinrichtung derart steuert, daß diese bei Überschreiten vorbestimmter Beschleunigungswerte entriegelt wird. Der erfindungsgemäße Gurtstrammer läßt sich durch eine einfache und robuste Konstruktion verwirklichen.

Zweckmäßigerweise besteht das Tragstück aus einer Schiene, die zwischen diese beidseits stützenden Zapfen und/oder Rollen längsverschieblich geführt und mit einer Lochreihe versehen ist, deren Löcher ein vorzugsweise federbelasteter, eine Auszugsbewegung sperrender Riegel einfällt. Die nur die Bewegung in einer Richtung sperrende Einrichtung kann auch aus einer freilaufähnlichen Sperreinrichtung mit Sperrung einer Drehrichtung bestehen. Ist ein derartiger Freilauf vorgesehen, kann eine Verbindung mit dem Tragstück über ein Zahnrad erfolgen. Das Tragstück kann auch aus flexiblem Material genügender Festigkeit bestehen, wobei dann eine klemmbackenähnliche Sperreinrichtung vorgesehen werden müßte.

In weiterer Ausgestaltung der Erfindung ist vorgesehen, daß das Zugorgan mit einem Zuganker verbunden ist, der durch ein durch das fahrzeugsensitive System auslösbares Kniehebelsystem verriegelbar ist und der eine Schraubendruckfeder durchsetzt und diese in seiner verriegelten Stellung zwischen einem an seinem Ende befestigtem Teller und einer deckelartigen Platte, die mit einer Durchgangsbohrung für den Anker versehen ist, in ihrem zusammengedrückten Zustand einspannt. Die vorgespannte Druckfeder bildet ein Kraftreservoir, das über das Zugorgan bei seiner Aktivierung dem Gurtschloß die erforderliche Einzugsbewegung erteilt.

In weiterer Ausgestaltung der Erfindung ist vorgesehen, daß das Kniehebelsystem aus einem mit einer Sperrnase versehenem, im Gehäuse schwenkbar gelagerten Sperrhebel besteht, der mit seiner Sperrnase in eine Rastausnehmung des Zugankers greift und in dessen vorderem Bereich ein Hebel eines Kniehebels angelenkt ist, dessen anderer Hebel auf einem gehäusefesten Zapfen gelagert ist, und daß der Kniehebel in der Verriegelungsstellung durch eine durch das fahrzeugsensitive System auslösbare Einrichtung in seiner Strecklage gehalten ist. Das fahrzeugsensitive System kann aus einem mechanischen, einem elektromechanischen oder einem elektronischen System bestehen.

Nach einer einfachen Ausführungsform ist vorgesehen, daß das fahrzeugsensitive System aus einer Kugel besteht, die zwischen einer Pfanne und einem Widerlager gehalten ist, von denen ein Teil mit dem derart von einer Feder belasteten Kniegelenk verbunden ist, das die Kugel bei einem bestimmten Beschleunigungswert, der das Vorliegen eines Crash oder gefährlichen Unfalls anzeigt, die Pfanne verläßt und dadurch der Kniehebel unter Lösen der Verriegelung des Zugankers einknickt.

Es können auch zwei Kniehebel in der Weise miteinander kombiniert werden, daß die Pfanne oder das Widerlager mit dem Kniegelenk eines zweiten Kniehebels verbunden sind, dessen Hebel einmal im Kniegelenk des ersten Kniehebels und zum anderen gehäusefest gelagert sind und daß das Kniegelenk des zweiten Kniehebels derart von einer Feder beaufschlagt ist, daß die Kugel bei einem bestimmten Beschleunigungswert, der einen die Sicherung der Fahrzeuginsassen erforderlich machenden Unfall anzeigt, die Pfanne verläßt und dadurch beide Kniehebel unter Lösen der Verriegelung des Zugankers einknicken. Durch dieses doppelte Kniehebelsystem lassen sich wegen Verringerung der die Kugel einspannenden Kräfte die Beschleunigungswerte, bei denen das fahrzeugsensitive System ansprechen soll, genauer einstellen.

Die Pfanne oder das Widerlager der Kugel können durch eine die Vorspannung der das Kniegelenk des ersten oder zweiten Kniehebels beaufschlagende Feder verändernde Stellschraube verstellbar sein.

Nach einer anderen Ausführungsform ist vorgesehen, daß der gehäusefest gelagerte Hebel des Kniehebels als Winkelhebel ausgebildet ist und zwischen dessen freiem, das Gelenk überragenden Arm und einem gehäusefesten Teil die Kugel eingespannt gehalten ist und daß die Rastflanken der Rastnase und der Rastausnehmung derart abgeschrägt sind, daß auf den Verriegelungshebel ein Moment in Entriegelungsrichtung wirkt. Bei dieser Ausführungsform lassen sich unterschiedliche die Auslösung bewirkende Beschleunigungen dadurch einstellen, daß die die Kugel halternde Pfanne in einer Führung des freien Hebelarms verstellbar ist.

Zweckmäßigerweise sind das Führungsgehäuse für das das Gurtschloß tragende Tragstück und das Federgehäuse, einschließlich des durch das fahrzeugsensitive System gesteuerten Kniehebelverriegelungssystems, miteinander verbunden. In dem Führungsgehäuse kann eine Umlenkrolle für ein das flexible Zugorgan bildende Seil gelagert sein.

Nach einer erfinderischen Weiterbildung ist vorgesehen, daß das Führungs- und Federgehäuse an dem Fahrzeugsitz befestigt und mit dem Führungsgehäuse ein Riegel verbunden ist, der formschlüssig in ein mit dem Fahrzeug fest verbundenen Zuganker einfällt, wenn auf das Gehäuse über das Tragstück des Gurtschlosses ein Zug ausgeübt wird. Diese Ausgestaltung gestattet es, das Führungs-und Federgehäuse leichter auszubilden, weil im Falle eines Crash oder Unfalls das Führungsgehäuse direkt mit einem die Zugkräfte in das Fahrzeug einleitenden Zuganker gekoppelt wird.

Nach einer weiteren erfinderischen Ausgestaltung ist vorgesehen, daß das Gehäuse schwenkbar am Sitz gehaltert ist und der Riegel aus einem schwenkbar im Gehäuse gelagerten und mit einer sägezahnartigen Verzahnung versehenen Hebel besteht, der im Abstand von der Lagerung durch einen Zapfen o.dgl. kurbelartig derart im Eingriff mit einem fahrzeugfesten Teil ist, daß bei einem Verschwenken des Gehäuses infolge eines auf dieses wirkenden Zuges der Hebel in Richtung auf den mit einer Gegenverzahnung versehenen Zuganker verschwenkt wird, so daß die Verzahnungen miteinander in Eingriff kommen und das Gehäuse mit dem Zuganker gekuppelt ist. Diese Ausgestaltung läßt die übliche Sitzverstellung zu, ohne daß durch diese auch das Gurtbandschloß relativ zu dem Sitz verlagert wird, so daß die zu sichernde Person das Gurtschloß immer an der gleichen gewohnten Stelle unabhängig von einer Verstellung des Sitzes findet. Um die Eingriffslage des Zugankers relativ zu dem der Verriegelung dienenden Hebel in einfacher Weise zu sichern, kann der Zuganker aus einem am Fahrzeug schwenkbar gelagerten Hebel bestehen, der im Führungsgehäuse geführt ist.

Ausführungsbeispiele der Erfindung werden nachstehend anhand der Zeichnung näher erläutert. In diser zeigt

Fig.1    einen Längsschnitt durch einen Gurtstrammer mit einer bedarfsweise wirksam werdenden Verriegelung des Führungsgehäuses,

Fig.2    einen Längsschnitt durch eine zweite Ausführungsform eines Gurtstrammers und

Fig.3    eine Vorderansicht des Gurtstrammers nach Fig.2.

Das Führungsgehäuse 1 für die im Querschnitt U-förmige Führungsschiene 2, die gelenkig in dem Gelenk 3 mit dem Gurtschloß 4 verbunden ist, ist starr mit dem Federgehäuse 5 verbunden, in dem die vorgespannte Schraubenfeder 6 gehaltert ist.

Das Führungsgehäuse 1 besteht aus einem U-förmig gebogenem Blechstück, wobei die Schenkel 7 die Seitenwände des Führungsgehäuses bilden und mit dem Federgehäuse 5 verbunden sind. Auf einer die Seitenwände 7 verbindenden Achse 8 ist die Führungsrolle 9 drehbar gelagert, über die das Zugseil 10 in einer Ringnut geführt ist. Das obere Ende des Zugseils 10 ist mit dem oberen Ende der Schiene 2 oder dem Gurtschloß 4 verbunden. Das andere Ende des Zuseils 10 ist über das Befestigungsstück 11 mit dem Zuganker 12 verbunden.

Die Schiene 2 ist in ihrem Stegteil mit eine Lochreihe bildenden etwa rechteckigen Durchbrüchen 13 versehen, die voneinander durch sprossenartige Stege 14 getrennt sind, die auf ihren von dem Gurtschloß 4 abgewandten Seiten abgerundete Flanken 15 aufweisen. Die Schiene stützt sich mit Ihrem Stegteil in dem Führungsgehäuse 1 beidseits der Lochreihe auf Gleitbuchsen 16 ab, die auf Bolzen 17,18 aufgeschoben sind, die in den Seitenwandungen 7 gehaltert sind. Die Schenkel 20 der Schiene 2 fassen zwischen sich die Umlenkrolle 8 ein und sind mit ihren Stirnkanten auf der Achse 8 der Umlenkrolle geführt. Zur Führung der Stirnkanten der Schenkel 20 können auch besondere in den Seitenwänden 7 gehalterte Bolzen vorgesehen werden. Auf einem zwischen den Seitenwänden 7 gehalterten Bolzen 22 ist schwenkbar ein Verriegelungshebel 23 gelagert, der durch eine nicht dargestellte Schenkelfeder o.dgl. in Anlage gegen den ebenfalls zwischen den Seitenwänden 7 gehalterten Bolzen 24 gehalten ist. Befindet sich der Verriegelungshebel 23 in Anlage an dem Bolzen 24, greift er mit seinem keilförmig abgeschrägten Spitzenbereich in ein Loch 13 der Lochreihe der Schiene 2. Wird das Gurtschloß 4 in Richtung auf das Führungsgehäuse 1 verschoben, springt der Verriegelungshebel 23 ratschenartig über die sprossenartigen Stege 14, wobei er bei einer Rückzugsbewegung in eine Aussparung 13 einfällt und diese sperrt.

Die Umlenkrolle 9 ist seitlich der Ringnut für das Zugseil 10 mit nasenartigen Vorsprüngen 30 versehen, die in eine Aussparung 31 der Schiene greifen und diese dadurch in ihrer Normallage halten. Zur Sicherung dieser Normallage ist die Umlenkrolle 9 mit einer stufenartigen Kerbe 32 versehen, in die das Verbindungsstück 11 des in seiner Verriegelungsstellung befindlichen Zugankers 12 greift. Durch diese Verriegelung der Umlenkrolle 9 ist die Tragschiene 2 derart festgehalten, daß sie auch dann nicht herabgedrückt werden kann, wenn die Einführzunge des Gurtes mit größerer Kraft das Gurtschloß 4 eingedrückt wird. Das Führungsgehäuse 1 ist über Fortsätze seiner Seitenwände 7 mit einem Zwischengehäuse 35 verbunden, das mit dem zylinderartigen Gehäuse 36 verbunden ist, in dem die Schraubenfeder 6 angeordnet ist. Der Zuganker 12 durchsetzt die Schraubenfeder 6 und trägt an seinem Ende einen auf diesen aufgeschraubten Federteller 37. In der dargestellten verriegelten Stellung ist die Zugfeder 6 zwischen dem Federteller 37 und einer vorderen deckelartigen Gehäusewandung 38, die der Zuganker 12 in einer mittleren Bohrung durchsetzt, derart zusammengedrückt gehalten, daß deren Windungen etwa auf Block liegen.

Im Bereich des Zwischengehäuses 35 ist der Zuganker 12 in der auf Block gespannten Stellung der Druckfeder 6 mit einer Rastausnehmung 39 versehen, in die arretierend die Rastnase 40 eines Verriegelungshebels 41 greift, der auf dem Bolzen 42 schwenkbar in dem Zwischengehäuse 35 gelagert ist. Im Bereich des freien Endes des Verriegelungshebels 41 ist ein Hebel 42 des Kniehebels 43 angelenkt, dessen anderer Hebel 44 auf dem gehäusefesten Zapfen 45 gelagert ist. Auf dem die beiden Hebel 42,44 gelenkig verbindenden Kniegelenkzapfen 46 ist der Hebel 47 des zweiten Kniehebels 48 gelenkig gelagert, dessen anderer Hebel 48 auf einem gehäusefesten Zapfen 49 schwenkbar gelagert ist. Das Kniegelenk 50 dieses zweiten Kniehebels 48 trägt auf seiner Unterseite eine mit dem Haltestück 51 verbundene Pfanne 52, zwischen der und einem gehäusefesten Widerlager die Sensorkugel 53 des fahrzeugsensitiven Systems eingespannt ist. Auf das Kniegelenk 50 wirkt die Belastungsfeder 55, die mit ihrem oberen Ende auf dem Gehäuse 35,36 abgestützt ist. Das Widerlager für die Kugel 53 ist durch die Stirnfläche der Stellschraube 56 gebildet, durch die sich die Spannkraft einstellen läßt, mit der die Kugel 53 zwischen der Pfanne 52 und dem Widerlager gehalten ist. Die Haltekraft wird etwa so groß gewählt, daß die Kugel aus ihrer Halterung herausgerissen wird, wenn auf diese Beschleunigungswerte im Bereich von 5g wirken. Wird die Kugel 53 aus ihrem Sitz herausgeschleudert, kollabieren unter der Wirkung der Druckfeder 55 die Kniegelenke 48,43, so daß die Rastnase 40 aus der Rastausnehmung 39 des Zugankers 12 herausgezogen wird und der Zuganker unter Mitnahme des Schlosses 4 nach rechts bewegt wird. In der Endstellung wird nach der dadurch bewirkten Strammung des Gurtes die Tragschiene 2 durch den Riegel 23 verriegelt.

Das Gehäuse 5 ist duch die Traglaschen 60,61 mit einem Seitenblech o.dgl. des Sitzes verbunden. Dabei ist die Traglasche 61 in der Lagerbohrung 62 schwenkbar auf einem Lagerzapfen des Seitenbleches gelagert, während die Traglasche 60 mit einem Bolzen 63 versehen ist, der derart in einem Langloch des Seitenbleches geführt ist, daß das Gehäuse 5 um den Lagerzapfen der Traglasche 61 schwenken kann.

Auf der Achse 8 der Umlenkrolle 9 ist schwenkbar ein Verriegelungshebel 65 gelagert, der im Abstand von der Achse 8 mit einem kurbelartigen Zapfen 66 versehen ist, der in eine diesem zugeordnete Bohrung des Seitenbleches o.dgl. greift. Wird das Gehäuse 5 durch einen auf das Schloß 4 wirkenden Zug im Uhrzeigersinn verschwenkt, wird dem Verriegelungshebel 65 aufgrund der kurbelartigen Verbindung mit dem Seitenblech eine Schwenkbewegung im Gegenuhrzeigersinn erteilt. Der Verriegelungshebel ist in seinem vorderen Bereich mit einer sägezahnähnlichen Verzahnung 67 versehen, die durch Verschwenkung des Verriegelungshebels 65 in Eingriff mit der Verzahnung 68 eines Zugankers 69 kommt, der in seinem Gelenk 70 gelenkig mit dem Fahrzeug verbunden ist. Zur Sicherung der Eingriffsstellung ist der Zuganker 69 mit seiner Rückseite auf der Achse 8 der Umlenkrolle 9 geführt. Der Verstellbereich des Sitzes ist durch das Höhenverstellfeld 71 angedeutet. Unabhängig von der Verstellung des Sitzes kann somit im Gefahrenfall die Verzahnung 67 des Verriegelungshebels 65 in Eingriff mit der Verzahnung 68 des Zugankers 69 kommen, so daß das Führungsgehäuse 1 und damit die Tragschiene 2 unmittelbar mit dem Zuganker 69 gekuppelt ist.

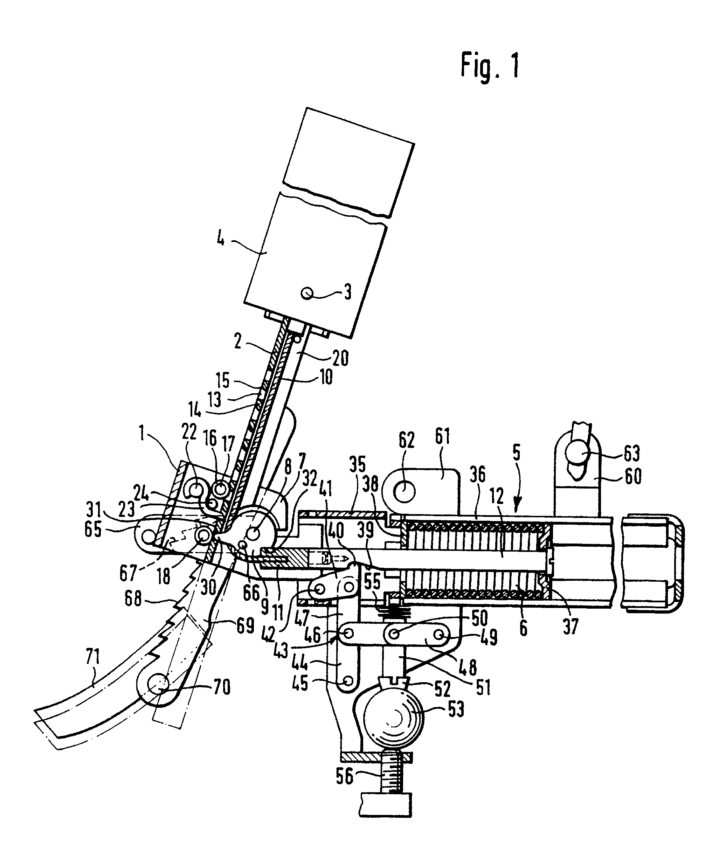

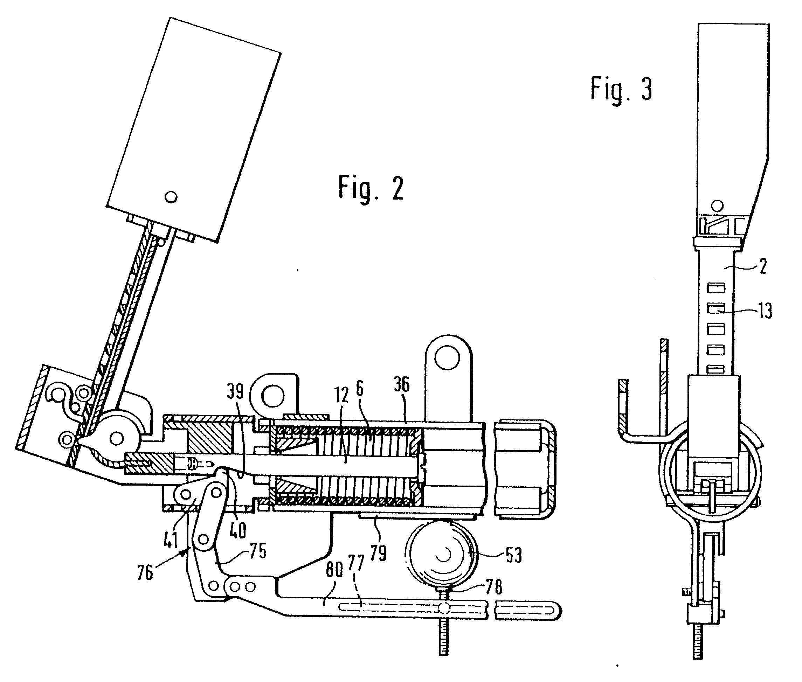

Das Ausführungsbeispiel nach den Fig.2 und 3 unterscheidet sich von dem nach Fig. 1 im wesentlichen nur dadurch, daß statt des zweiten Kniehebels 48 der Hebel 75 des Kniehebels 76 als Winkelhebel ausgebildet ist, dessen frei auskragender Hebelarm 76 mit einem Führungsschlitz 77 für das pfannenartige Halteteil 78 der Kugel 53 versehen ist. Die Kugel 53 ist zwischen der in dem Führungsschlitz 77 verstellbaren Haltepfanne 78 und einem Widerlagerblech 79 eingespannt, das an der Unterseite des Gehäuses 36 vorgesehen ist und im wesentlichen parallel zu dem Führungsschlitz 77 verläuft.

Die Rastnase 40 und die Rastnut 39 des Ankers 12 stützen sich in der Raststellung mit abgeschrägten oder abgerundeten Rastflanken aufeinander ab, so daß auf den Rasthebel 41 eine Kraftkomponente der Feder 6 wirkt, die bestrebt ist, den Rasthebel 41 in Entriegelungsrichtung zu verschwenken. Diese Kraftkomponente wird über den Kniehebel 76 auf den Hebelarm 80 übertragen, so daß die Kugel 53 zwischen der Pfanne 78 und dem Widerlagerblech 79 mit einer der wirksamen Hebelarmlänge entsprechenden Reaktionskraft eingespannt ist. Durch Verstellung der Pfanne 78 in dem Führungsschlitz 77 läßt sich somit die Beschleunigung einstellen, die erforderlich ist, um die Kugel 53 aus ihrem Sitz zu schleudern und den Kniehebel 76 zur Freigabe des Zugankers 12 kollabieren zu lassen.

## Patentansprüche

1. Gurtstrammer für Fahrzeugsicherheitsgurte, bestehend aus einer das Gurtschloß (4) im Sinne einer Gurtstrammung bewegenden und am Ende der strammenden Bewegung blockierenden Einrichtung, die durch ein sogenanntes fahrzeugsensitives System (51-53) bei Überschreiten vorbestimmter kritischer Beschleunigungswerte aktiviert wird, dadurch gekennzeichnet,

daß das das Gurtschloß (4) mit einem fahrzeugfesten Teil verbindende Tragstück (2) in einem mit dem Fahrzeug fest verbundenen oder mit diesem verriegelbaren Gehäuse (1) o.dgl. längsverschieblich geführt und das Gehäuse (1) o.dgl. mit einer Einrichtung versehen ist, die eine Einzugsbewegung des Tragstücks (2) gestattet und dessen Bewegung in Gegenrichtung blockiert,

daß das Gurtschloß (4) oder das Tragstück (2) mit einem Ende eines vorzugsweise flexiblen Zugorgans (10) verbunden ist, dessen anderes Ende mit einem aus einer vorgespannten Feder (6) bestehenden Kraftreservoir verbunden ist, das oder die bei ihrer Entspannung dem Gurtschloß (4) über das Zugorgan (10) eine Einzugsbewegung erteilen, und

daß das fahrzeugsensitive System eine die Feder (6) in ihrer vorgespannten Stellung haltende Verriegelungseinrichtung derart steuert, daß diese bei Überschreiten vorbestimmter Beschleunigungswerte entriegelt wird.

2. Gurtstrammer nach Anspruch 1, dadurch gekennzeichnet, daß das Tragstück aus einer Schiene (2) besteht, die zwischen diese beidseits stützenden Zapfen (17,18) und/oder Rollen längsverschieblich geführt und mit einer Lochreihe versehen ist, in deren Löcher (13) ein vorzugsweise federbelasteter, eine Auszugsbewegung sperrender Riegel (23) einfällt.

3. Gurtstrammer nach Anspruch 1 oder 2, dadurch gekennzeichnet, daß das Zugorgan (10) mit einem Zuganker (12) verbunden ist, der durch ein durch das fahrzeugsensitive System auslösbares Kniehebelsystem (43) verriegelbar ist und der eine Schraubendruckfeder (6) durchsetzt und diese in seiner verriegelten Stellung zwischen einem an seinem Ende befestigten Teller (37) und einer deckelartigen Platte (38), die mit einer Durchgangsbohrung für den Anker (12) versehen ist, in ihrem zusammengedrückten Zustand einspannt.

4. Gurtstrammer nach einem der Ansprüche 1-3, dadurch gekennzeichnet, daß das Kniehebelsystem (43) aus einem mit einer Sperrnase (40) versehenem im Gehäuse schwenkbar gelagerten Sperrhebel (41) besteht, der mit seiner Sperrnase (40) in einer Rastausnehmung (39) des Zugankers (12) greift und in dessen vorderem Bereich ein Hebel (42) eines Kniehebels (43) angelenkt ist, dessen anderer Hebel (44) auf einem gehäusefesten Zapfen (45) gelagert ist, und daß der Kniehebel (43) in der Verriegelungsstellung durch eine durch das fahrzeugsensitive System auslösbare Einrichtung in seiner Strecklage gehalten ist.

5. Gurtstrammer nach Anspruch 4, dadurch gekennzeichnet, daß das fahrzeugsensitive System aus einer Kugel (53) besteht, die zwischen einer Pfanne (52) und einem Widerlager (56) gehalten ist, von denen ein Teil mit dem derart von einer Feder belasteten Kniegelenk verbunden ist, daß die Kugel (53) bei einem bestimmten Beschleunigungswert die Pfanne verläßt und dadurch der Kniehebel unter Lösen der Verriegelung des Zugankers einknickt.

6. Gurtstrammer nach Anspruch 4, dadurch gekennzeichnet, daß das fahrzeugsensitive System aus einer Kugel (53) besteht, die zwischen einer Pfanne (52) und einem Widerlager (56) gehalten ist, daß die Pfanne (52) oder das Widerlager mit dem Kniegelenk (50) eines zweiten Kniehebels (48) verbunden sind, dessen Hebel (47,48) einmal im Kniegelenk (46) des ersten Kniehebels (43) und zum anderen gehäusefest gelagert sind, und daß das Kniegelenk (50) des zweiten Kniehebels derart von einer Feder (55) beaufschlagt ist, daß die Kugel (53) bei einem bestimmten Beschleunigungswert die Pfanne (52) verläßt und dadurch beide Kniehebel (43,48) unter Lösen der Verriegelung des Zugankers (12) einknicken.

7. Gurtstrammer nach einem der Ansprüche 1-6, dadurch gekennzeichnet, daß die Pfanne oder das Widerlager durch eine die Vorspannung der das Kniegelenk des ersten oder zweiten Kniehebels beaufschlagenden Feder verändernde Stellschraube (56) verstellbar sind.

8. Gurtstrammer nach Anspruch 4, dadurch gekennzeichnet, daß der gehäusefest gelagerte Hebel (75) des Kniehebels (76) als Winkelhebel ausgebildet ist und zwischen dessen freiem, das Gelenk überragenden Arm (80) und einem gehäusefesten Teil (59) die Kugel (53) eingespannt gehalten ist und daß die Rastflanken der Rastnase (40) und der Rastausnehmung (39) des Zugankers (12) derart abgeschrägt oder abgerundet sind, daß auf den Verriegelungshebel (41) ein Moment in Entriegelungsrichtung wirkt.

9. Gurtstrammer nach Anspruch 8, dadurch gekennzeichnet, daß die die Kugel (53) halternde Pfanne (78) in einer Führung (77) des freien Hebelarms (80) verstellbar ist.

10. Gurtstrammer nach einem der Ansprüche 1-9, dadurch gekennzeichnet, daß das Führungsgehäuse (1) für das das Gurtschloß (4) tragende Tragstück (2) und das Federgehäuse (5), einschließlich des durch das fahrzeugsensitive System gesteuerten Kniehebelverriegelungssystem, miteinander verbunden sind.

11. Gurtstrammer nach einem der Ansprüche 1-10, dadurch gekennzeichnet, daß in dem Führungsgehäuse (1) eine Umlenkrolle (9) für ein das flexible Zugorgan bildende Seil (10) gelagert ist.

12. Gurtstrammer nach Anspruch 11, dadurch gekennzeichnet, daß die Umlenkrolle (9) mit einer in ein Loch (31) der Tragschiene (2) des Gurtschlosses (4) greifenden Nase (30) versehen ist und der Zuganker (12) oder ein mit diesem verbundenes Teil (11) in der Verriegelungsstellung arretierend in eine Kerbe (32) o.dgl. der Umlenkrolle (9) greift.

**13.** Gurtstrammer nach einem der Ansprüche 1-12, dadurch gekennzeichnet, daß das Führungs- und Federgehäuse (1,5) am Fahrzeugsitz befestigt und mit dem Führungsgehäuse (1) ein Riegel (65) verbunden ist, der formschlüssig in einen mit dem Fahrzeug fest verbundenen Zuganker (69) einfällt, wenn auf das Gehäuse über das Tragstück des Gurtschlosses ein Zug ausgeübt wird.

**14.** Gurtstrammer nach einem der Ansprüche 1-13, dadurch gekennzeichnet, daß das Gehäuse (1,5) schwenkbar am Sitz gehaltert ist und der Riegel (65) aus einem schwenkbar im Gehäuse (1) gelagerten und mit einer sägezahnartigen Verzahnung (67) versehenen Hebel (65) besteht, der im Abstand von der Lagerung (8) durch einen Zapfen (66) o.dgl. kurbelartig derart im Eingriff mit einem fahrzeugfesten Teil gehalten ist, das bei einem Verschwenken des Gehäuses (1,5) infolge eines auf dieses wirkenden Zuges der Hebel (65) in Richtung auf den mit einer Gegenverzahnung (68) versehenen Zuganker (69) verschwenkt wird, so daß die Verzahnungen (67,68) in Eingriff kommen und das Gehäuse (1) mit dem Zuganker (69) gekoppelt ist.

**15.** Gurtstrammer nach Anspruch 13 oder 14, dadurch gekennzeichnet, daß der Zuganker (69) aus einem am Fahrzeug schwenkbar gelagerten Hebel besteht, der im Führungsgehäuse (1) geführt ist.

## Claims

**1.** A belt tightener for vehicle safety belts consisting of a mechanism moving the belt lock (4) in a belt tightening direction and locking it at the end of the tightening movement, which mechanism is activated by a so-called vehicle-sensitive system (51, 53) when predetermined critical acceleration values are exceeded, characterized in that

the carrying member (2) connecting the belt lock (4) to a part fixed to the vehicle is carried for longitudinal displacement in a housing (1) or the like, fixedly joined to the vehicle or lockable therewith, and that the housing (1) or the like is provided with a mechanism permitting a pulling-in movement of the carrying member (2) and blocking its movement in the opposite direction,

the belt lock (4) or the carrying member (2) is connected to one end of a preferably flexible pull element (10), the other end whereof is connected to a force reservoir consisting of a prestressed spring (6) which, on being released impart(s) to the belt lock (4) a pulling-in motion via the pull element (10) and

the vehicle-sensitive system controls a locking mechanism retaining the spring (6) in its prestressed position in such a way that this mechanism is unlocked when predetermined acceleration values are exceeded.

**2.** A belt tightener according to claim 1, characterized in that the carrying member consists of a rail (2) that is carried for longitudinal displacement between pins (17, 18) and/or rollers supporting the rail on both sides and is provided with a row of holes, in the holes (13) whereof there engages a preferable spring-loaded bolt (23) blocking a pulling out movement.

**3.** A belt tightener according to claim 1 or 2, characterized in that the pull element(10) is connected to a tension rod (12) which is lockable by a toggle lever system (43) that can be triggered by the vehicle-sensitive system and which rod passes through a helical compression spring (8) and which, in its locked position between a plate (37) fixed at its end and a cover type plate (38) provided whith a through hole for the tension rod (12), holds the spring in its compressed state.

**4.** A belt tightener according to one of claims 1 to 3, characterized in that the toggle lever system (43), consists of a locking lever (41) that is provided with a locking projection (40) and is pivotably mounted in the housing, which lever reaches with its locking projection (40) into an engagement recess (39) of the tension rod (12) and in the front region of which lever there is articulated a lever (42) of a toggle lever (43) whose other lever (44) is mounted on a pin (45) fixed to the housing, and that in the locking position the toggle lever (43) is held in its stretched position by a mechanism that can be triggered by the vehicle-sensitive system.

**5.** A belt tightener acording to claim 4, characterized in that the vehicle-sensitive system consists of a ball (53) held between a socket (52) and a support (56), whereof one part is connected to a spring-loaded toggle joint in such a way that at a specific acceleration value, the ball (53) leaves the socket and that because of this, the toggle lever folds in while releasing the locking of the tension rod.

6. A belt tightener according to claim 4, characterized in that the vehicle-sensitive system consists of a ball (53) held between a socket (52) and a support (56), that the socket (52) or the support is connected to the toggle joint (50) of a second toggle lever (48) whose levers (47, 48) are mounted on the one hand in the toggle joint (46) of the first toggle lever (43) and on the other hand, are secured to the housing, and that the toggle joint (50) of the second toggle lever is loaded by a spring (55) in such a way that at a specified acceleration value, the ball (53) leaves the socket (52) and that because of this, both toggle levers (43, 48) fold in while releasing the locking of the tension rod (12).

7. A belt tightener according to one of claims 1 to 6, characterized in that the socket or the support is adjustable by a set screw (56) altering the prestressing of the spring acting on the toggle joint of the first or second toggle lever.

8. A belt tightener according to claim 4, characterized in that the lever (75) of the toggle lever (76), mounted in a fixed position on the housing is designed as a bell crank lever and that between its free arm (80) projecting beyond the joint and a part (59) fixed to the housing, the ball (53) is held restrained in position, and that the engagement flanks of the engagement projection (4) and the engagement recess (39) of the tension rod (12) are bevelled or rounded in such a way that a moment is exerted on the locking lever (41) in the unlocking direction.

9. A belt tightener according to claim 8, characterized in that the socket (78) holding the ball (53) is adjustable in a guideway (77) of the free lever arm (80).

10. A belt tightener according to one of claims 1 to 9, characterized in that the guide housing (1) for the carrying member (2) bearing the belt lock (4) and the spring housing (5), including the toggle lever locking system controlled by the vehicle-sensitive system, are interconnected.

11. A belt tightener according to one of claims 1 to 10, characterized in that a guide roller (9) for the cable (10) forming the flexible pull element is mounted in the guide housing (1).

12. A belt tightener according to claim 11, characterized in that the guide roller (9) is provided with a projection (30) reaching into a hole (31) of the carrying rail (2) of the belt lock (4) and that the tension rod (12) or a part (11) connected thereto engages with an arresting effect in a notch (32) or the like of the guide roller (9).

13. A belt tightener according to one of claims 1 to 12, characterized in that the guide and spring housing (1, 5) is mounted on the vehicle seat and that a bolt (65) is connected to the housing (1), which bolt engages conjugately in a tension rod (69) fixedly joined to the vehicle when a pull is exerted on the housing via the carrying member of the belt lock.

14. A belt tightener according to one of claims 1 to 13, characterized in that the housing (1, 5) is pivotably mounted on the seat and that the bolt (65) consists of a lever (65) pivotable mounted in the housing (1) and provided with a saw tooth type tooth system (67), which lever is held in engagement with a part fixed to the vehicle by a pin (66) or the like at a distance from the bearing (8) in the manner of a crank, in such a way that when the housing (1, 5) is pivoted as a result of a pull exerted thereon, the lever (65) is pivoted towards the tension rod (69) provided with a matching tooth system (68), so that the tooth systems (67, 68) come to engage and the housing (1) is coupled with the tension rod (69).

15. A belt tightener according to claim 13 or 14, characterized in that the tension rod (69) consists of a lever pivotably mounted on the vehicle, which lever is carried in the housing (1).

**Revendications**

1. Tendeur pour ceintures de sécurité de véhicules, formé d'un dispositif déplaçant le fermoir de ceinture (4) sous forme de raidissement de la ceinture et se bloquant à l'issue du mouvement de serrage, qui est activé par un système (51, 53), dit sensible au véhicule, lorsque des valeurs d'accélération critiques et prédéfinies sont dépassées, caractérisé en ce que l'élément de support (2) reliant le fermoir de ceinture (4) à un élément fixé au véhicule est guidé de manière à pouvoir se déplacer longitudinalement dans un boîtier (1), ou analogue, solidement fixé au véhicule ou pouvant être verrouillé avec celui-ci, et le boîtier (1) ou analogue est pourvu d'un dispositif qui permet un mouvement de rentrée de l'élément de support (2) et bloque son déplacement dans le sens inverse,
le fermoir de ceinture (4) ou l'élément de support (2) est relié à une extrémité d'un organe de traction (10), de préférence flexible, dont l'autre extrémité est reliée à un réservoir de force formé par un ressort précontraint (6) qui, lorsqu'il se détend, transmet un mouvement de rentrée au fermoir de ceinture au moyen de l'organe de traction (10), et

le système sensible au véhicule commande un dispositif de verrouillage qui maintient le ressort (6) dans sa position précontrainte, de telle manière que ledit dispositif est déverrouillé lorsque des valeurs d'accélération prédéfinies sont dépassées.

2. Tendeur de ceinture selon la revendication 1, caractérisé en ce que l'élément de support est formé d'un rail (2) qui est guidé de manière à pouvoir se déplacer longitudinalement entre deux tenons (17, 18) et/ou roulettes soutenant ledit rail des deux côtés, et il est pourvu d'une rangée de trous (13) dans lesquels s'engage un verrou (23), de préférence commandé par ressort, qui empêche un mouvement de sortie.

3. Tendeur de ceinture selon la revendication 1 ou 2, caractérisé en ce que l'organe de traction (10) est relié à un tirant d'ancrage (12) qui peut être verrouillé par un système de leviers à genouillère (43), pouvant être déclenché par le système sensible au véhicule, et qui retient un ressort de compression hélicoïdal (6) et fixe celui-ci dans son état comprimé, lorsqu'il est dans sa position verrouillée, entre un disque (37) fixé à l'une de ses extrémités et une plaque (38) en forme de couvercle, qui est pourvue d'un trou de passage pour l'ancrage (12).

4. Tendeur de ceinture selon l'une des revendications 1 à 3, caractérisé en ce que le système de leviers à genouillère (43) est formé d'un levier d'arrêt (41) pourvu d'un talon d'encliquetage (40) et monté en rotation dans le boîtier, qui s'engage dans un évidement d'encliquetage (39) du tirant d'ancrage (12) par son talon d'encliquetage (40), et dont la partie avant est articulée à un bras (42) d'un levier à genouillère (43) dont l'autre bras (44) est monté sur un tenon (45), et en ce que le levier à genouillère (43) en position de verrouillage est maintenu dans sa position étirée par un dispositif pouvant être déclenché par le système sensible au véhicule.

5. Tendeur de ceinture selon la revendication 4, caractérisé en ce que le système sensible au véhicule est composé d'une bille (53) qui est maintenue entre un coussinet (52) et une butée (56), l'une de ces pièces étant reliée à l'articulation de genouillère chargée par un ressort de telle sorte que la bille (53), sous une valeur d'accélération définie s'échappe du coussinet, et de ce fait l'articulation à genouillère fléchit en débloquant le verrouillage du tirant d'ancrage.

6. Tendeur de ceinture selon la revendication 4, caractérisé en ce que le système sensible au véhicule est formé d'une bille (53) qui est maintenue entre un coussinet (52) et une butée (56), que le coussinet (52) ou la butée est reliée à l'articulation de genouillère (50) d'un deuxième levier à genouillère (48) dont les bras (47, 48) sont reliés à l'articulation de genouillère (46) du premier levier à genouillère (43), d'une part, et son fixés au boîtier, d'autre part, et que l'articulation de genouillère (50) du deuxième levier à genouillère est chargée par un ressort (55) d'une manière telle que la bille (53) s'échappe du coussinet sous une valeur d'accélération définie et, de ce fait, les deux leviers à genouillère (43, 48) fléchissent en débloquant le verrouillage du tirant d'ancrage (12).

7. Tendeur de ceinture selon l'une des revendications 1 à 6, caractérisé en ce que le coussinet ou la butée peut être déplacé au moyen d'une vis de réglage (56) modifiant la précontrainte du ressort venant charger l'articulation de genouillère du premier ou du deuxième levier à genouillère.

8. Tendeur de ceinture selon la revendication 4, caractérisé en ce que le levier (75), solidement fixé au boîtier, du levier à genouillère (76) est réalisé sous forme de levier coudé et la bille (53) est enserrée entre son bras libre (80) dépassant l'articulation et un élément (59) fixé au boîtier, et que les flancs d'encliquetage du talon d'encliquetage (40) et de l'évidement d'encliquetage (39) du tirant d'ancrage (12) sont biseautés ou arrondis de telle manière qu'un moment agit sur le levier de verrouillage (41) dans le sens du déverrouillage

9. Tendeur de ceinture selon la revendication 8, caractérisé en ce que le coussinet (78) maintenant la bille (53) peut être déplacé dans un guide (77) du bras de levier libre (80).

10. Tendeur de ceinture selon l'une des revendications 1 à 9, caractérisé en ce que le boîtier de guidage (1) de l'élément de support (2) portant le fermoir de ceinture (4) et le boîtier de ressort (5), y compris le système de verrouillage à leviers à genouillères commandé par le système sensible au véhicule, sont reliés ensemble.

11. Tendeur de ceinture selon l'une des revendications 1 à 10, caractérisé en ce qu'une poulie de renvoi (9) est logée dans le boîtier de guidage (1) pour un câble (10) formant l'élément de traction flexible.

12. Tendeur de ceinture selon la revendication 11, caractérisé en ce que la poulie de renvoi (9) est pourvue d'un talon (30) s'engageant dans un trou (31) du rail de support (2) du fermoir de ceinture (4), et le tirant d'ancrage (12), ou un élément (11) relié à celui-ci, s'engage dans une encoche (32) ou analogue de la poulie de renvoie (9) et se bloque en position de verrouillage.

13. Tendeur de ceinture selon l'une des revendications 1 à 12, caractérisé en ce que le boîtier de guidage et de ressort (1,5) est fixé au siège du véhicule et un verrou (65) est relié au boîtier de guidage (1), lequel verrou s'engage, par complémentarité de formes, dans un tirant d'ancrage (69) solidement fixé au véhicule quand une traction est exercée sur le boîtier par l'intermédiaire de l'élément de support du fermoir de ceinture.

14. Tendeur de ceinture selon l'une des revendications 1 à 13, caractérisé en ce que le boîtier (1, 5) est monté en rotation sur le siège, et le verrou (65) est formé d'un levier (65) monté en rotation dans le boîtier (1) et pourvu d'un engrenage (67) en forme de dents de scie, lequel levier qui maintenu en prise à l'écart du pivot (8) avec un élement fixé au boîtier, par un tenon (66) ou analogue, à la manière d'une manivelle de façon que, lorsque le boîtier (1, 5) pivote sous l'effet d'une traction exercée sur celui-ci, le levier (65) est pivoté en direction du tirant d'ancrage (69) pourvu d'un engrenage opposé (6 8), de sorte que les engrenages (67, 68) viennent en prise et le boîtier (1) est couplé au tirant d'ancrage (69).

15. Tendeur de ceinture selon la revendication 13 ou 14, caractérisé en ce que le tirant d'ancrage (69) est formé d'un levier monté en rotation sur le véhicule, qui est guidé dans le boîtier de guidage (1).

Fig. 1

Fig. 3

Fig. 2